# EUROPEAN PATENT APPLICATION

(11) **EP 1 199 657 A2**
(43) Date of publication of application: **24.04.2002**
(21) Application number: 01121789.0
(22) Date of filing: 20.09.2001
(51) Int. Cl.: G06F 17/60

(54) **Product information system**

(30) Priority: 29.09.2000 JP 2000298923
(71) Applicant: Mori Seiki Co., Ltd., Yamatokoriyama-shi, Nara 639-1160 (JP)
(72) Inventor: Honse, Tadashi, Yamatokoriyama-shi, Nara 639-1160 (JP)
(74) Representative: Reinhard - Skuhra - Weise & Partner

(57) **Abstract**

The present invention relates to a product information system in which necessary product information can be timely and appropriately provided and also can be easily and quickly revised in accordance with a design modification. The present system is a product information system 1 in which a main server 10 and a plurality of subservers 30 each of which is disposed in each set region can be mutually connected via a network 2. The main server 10 is comprised in a user information storing means for mutually linking and storing identification information assigned to a user and an address of a subserver 30 which controls the said user, a searching means for searching, based on identification information of a user, through data stored in the said user information storing means and obtaining an address of a subserver which controls the said user, and a sending means for sending the obtained address of the subserver to a terminal unit of the user. The subservers 30 are each comprised in a product information storing means in which product information is stored and a product information providing means for providing product information stored in the said product information storing means in response to a request from the said user terminal unit.

## Description

### BACKGROUND OF THE INVENTION

### Field of the invention

The present invention relates to a production information system in which a main server and a plurality of subservers each of which is disposed in each set region can be mutually connected via a network, wherein production information can be provided in response to a request from a user.

### Description of the Prior Art

For example, in the field of machine tools, for sales thereof, a machine tool is not directly sold from a manufacturer to individual users, but is sold to a user via a distributing agent that intermediates between the manufacturer and user. In such a case, a product catalogue and a written estimate for the machine tool to be provided for the user are generally provided via the said distributing agent to the user.

Most product catalogues are printed matters for which product information including photos and specifications of products are printed, and priorly, in consideration of delivery times and costs, a large quantity of product catalogues have been printed and stocked so that the catalogues can be promptly provided in response to a request form a user and a distributing agent.

Also, in terms of the written estimate, after details such as specifications are negotiated between the distributing agent and the user, a request is made from the distributing agent to the manufacturer for estimate, a written estimate is prepared by the manufacturer in response to the request, and the written estimate is then handed via the distributing agent to the user.

In addition, not only limited to machine tools but for the majority of products, design modifications and the like are carried out for the purpose of improving functions as everyday occurrences, and if such a design modification is carried out it is necessary to revise the existing product catalogue in accordance with the design modification.

However, as described above, since the product catalogues have been printed in bulk at one time and stocked, if a design modification is carried out, there is waste in that the catalogues in stock are subjected to disposal or the catalogues in stock need to be revised.

Also, since a written estimate is prepared by the manufacturer only at the request from the distributing agent and the written estimate is handed via the distributing agent to the user, it occasionally takes a long time before the user receives the written estimate, therefore, there is a case wherein a significant business negotiations are canceled.

The present invention is made in view of the foregoing actual circumstances and an object thereof is to provide a product information system which can timely and appropriately provide necessary product information and also can easily and quickly revise product information in accordance with a design modification and the like and provide the said information.

### SUMMARY OF THE INVENTION

In order to achieve the above-described object, the present invention provides a product information system in which a main server and a plurality of subservers, each of which is disposed in each set region, can be mutually connected via a network, wherein
the said main server comprises:
   a user information storing means for mutually linking and storing identification information assigned to a user and an address of a subserver which controls the said user;
   a searching means for receiving identification information from a user, searching through data stored in the said user information storing means, and obtaining an address of a subserver which controls the said user; and
   a sending means for sending the address of the subserver obtained by the said searching means to a terminal unit of the user,
and the said each subserver comprises:
   a product information storing means in which product information is stored; and
   a product information providing means for providing product information stored in the said product information storing means in response to a request from the said user terminal unit.

According to the present product information system, when predetermined identification information is sent from a user terminal unit to the main server, this is accepted by the searching means, the searching means searches through data stored in the user information storing means based on the accepted identification information and obtains an address of a subserver which controls the said user. Each subserver is, for example, disposed in each of the regions divided into a predetermined number. To users who belong to each region, individual identification information is respectively given and a subserver within each region is allocated, respectively. The identification information and addresses of the subservers which control the said users thus allocated and given are mutually linked and stored in the above-described user information storing means. Then, the address data obtained by the searching means is sent to the user terminal unit by the sending means.

The user terminal unit receives the address data from the sending means of the main server and makes a connection with a subserver having the said address, thereby enabling communication with the said subserver, thus making it possible to receive product information stored in the product information storing means via the product information providing means of the subserver.

In addition, the product information referred to herein means product catalogue information, estimate information and the like. Necessary product information may be sent from the main server and stored in the product information storing means or, alternatively, product information stored in a recording medium may be uploaded to the product information storing means . Whenever the catalogue information is modified due to a design modification and the like, product information data stored in the product information storing means is updated with the modified data.

Thus, according to the present invention, the catalogue information is stored as electronic data and provided for the user terminal unit when necessary, therefore, even if a necessity to modify the contents of the product catalogue arises due to a design modification and the like, the catalogue data stored in the production information storing means can be easily and quickly renewed with the modified catalogue data, and in addition, there is no waste such that printed catalogues need disposing as those of the aforementioned prior-art.

In addition, since the catalogue information as electronic data is mostly image data, the volume thereof is extremely large. Accordingly, in a system where such data is provided only from the main server to the user terminal unit, if the main server is simultaneously accessed by a large number of user terminal units and simultaneously requests catalogue data, the sending speed becomes slow and there is a possibility that quick data provision becomes impossible. In the present embodiment, the subserver is dispersedly arranged in each of the regions divided into a predetermined number, to a user who belongs to each region, the subserver arranged in its own region is allocated, and the product information is provided from the allocated subserver to the said user terminal unit, therefore, an excessive concentration of access from users can be prevented and quick and smooth provision of production information is possible.

In addition, since the user can obtain the estimate information by accessing the subserver, compared to the aforementioned prior art, a desired estimate can be quickly obtained. Accordingly, occurrence of a problem such that negotiations are canceled because of a delay in submitting an estimate as in the prior art can be prevented.

It is preferable that an output device for outputting, as a hard copy, product information that is requested from the user is connected with each subserver. As mentioned above, since the catalogue data is mostly image data, the volume is extremely large. Accordingly, if such catalogue data is sent via communications, the sending time becomes considerably long. According to the present invention, since the requested catalogue information can be output from the output device connected to the subserver as a hard copy and provided for the user, the communications time with the user terminal unit for providing the catalogue information can become an extremely short time.

If the product information is provided to the user from each subserver as described above, information as to what production information has been provided to users, that is, information concerning user needs cannot be administered in a unified manner. In such a case, it is satisfactory that a provision result sending means is comprised in each subserver, data concerning provided product information is sent to the said main server, and such data is controlled in the main server in a unified manner.

### DESCRIPTION OF THE DRAWINGS

Fig. 1 is an explanatory view showing the schematic configuration of the product information system according to a first embodiment of the present invention.
Fig. 2 is a block diagram showing the schematic configuration of the main server of the production information system according to the present embodiment.
Fig. 3 is a block diagram showing the schematic configuration of the subserver of the production information system according to the present embodiment.

### DESCRIPTION OF THE PREFERRED EMBODIMENTS

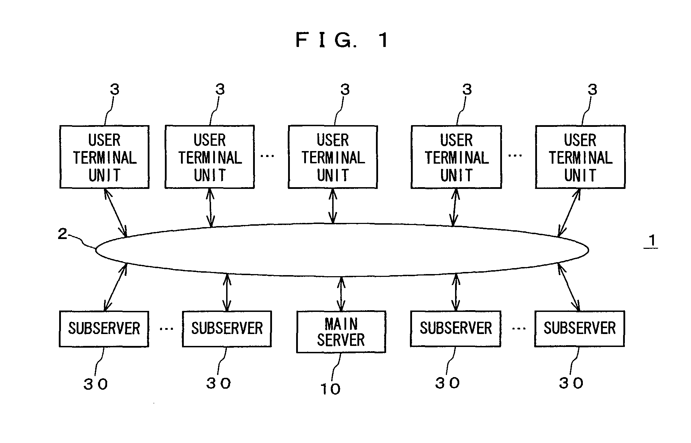

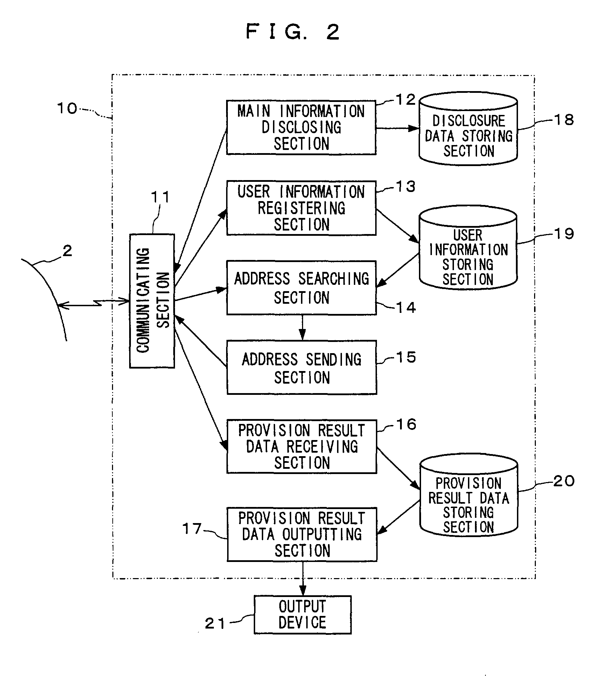

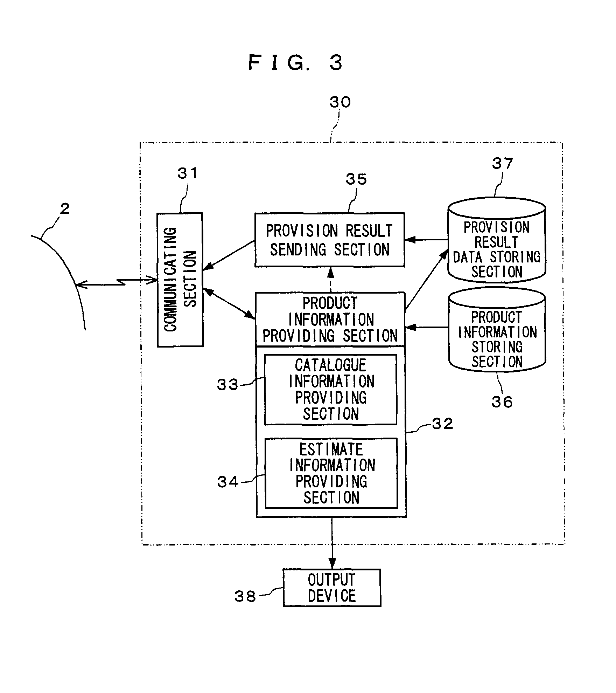

Hereinafter, a detailed embodiment of the present invention will be described based on the attached drawings. Fig. 1 is an explanatory view showing the schematic configuration of the product information system according to the present embodiment, Fig. 2 is a block diagram showing the schematic configuration of the main server of this production information system according to the present embodiment, and Fig. 3 is a block diagram showing the schematic configuration of the subserver of the above-described production information system.

As shown in Fig. 1, the product information system of the present embodiment (hereinafter, simply referred to as "information system") 1 is provided with user terminal units 3, a main server 10, subservers 30 and the like which are mutually connected via a network 2 such as the Internet, the main server 10 and the subservers 30 function as servers each having an Internet server such as a WWW server and a CGI script, and the user terminal units 3 function as clients each having a browser. Herein, the main server 10 and the subservers 30 are servers installed on the side of a machine tool manufacturer and the user terminal units 3 are terminal units used by machine tool distributing agents. In addition, the subservers 30 are disposed in the respective regions determined by dividing a business area into several regions. Hereinafter, details of each portion will be described.

As shown in Fig. 2, the main server 10 is provided with a main information disclosing section 12, a user information registering section 13, an address searching section 14, an address sending section 15, a provision result data receiving section 16, a provision result data outputting section 17 comprising a CPU, a ROM, a RAM, a program storing section and the like; a disclosure data storing section 18, a user information storing section 19, and a provision result data storing section 20 comprising an auxiliary storing device such as a hard disk and the like; a communicating section 11 and the like, and is connected to the above network 2 via the said communicating section 11. In addition, an output device 21 is connected to the provision result data outputting section 17.

The main information disclosing section 12 is a processing section where information concerning the present system which is stored in the disclosure data storing section 18, information concerning catalogue provisions and the like, and information concerning user registration are disclosed by means of web pages via the network 2, and enables browsing of the above web pages from the user terminal units 3 via the network 2.

The user information registering section 13 performs processes to accept data necessary to register a user (address, name, password, and the like) from the user terminal unit 3 via a web page concerning user registration provided by the main information disclosing section 12 for browsing and assign these accepted data identification information which is specific to the said user, and also to mutually link the accepted data and identification information with address data of the subserver 30 installed in a region, to which the said user belongs, and stores these accepted data, the identification information, the address data in the user information storing section 19.

Also, when a request to browse detailed information is issued from the user terminal unit 3, along with input of the identification information and password, via a web page concerning catalogue provisions and the like provided by the main information disclosing section 12 for browsing, the address searching section 14 performs processes to accept the said request, search through data stored in the user information storing section 19, confirm identity by collating the identification information with the password, then obtain address data of the subserver 30 assigned to the said user, and send the obtained address data to the address sending section 15. Then, the address sending section 15 sends the address data received from the address searching section 14 to the user terminal unit 3 which has issued the request.

Also, the provision result data receiving section 16 performs processes to receive information concerning provision information which has been output to the user terminal unit 3 and an output device 38 (provision result data) from a provision result sending section 35 (which will be described later) of the subserver 30 and store the received provision result data in the provision result data storing section 20. Also, the provision result data outputting section 17 performs processes to output the data stored in the provision result data storing section 20 to the output device 21 when necessary.

As shown in Fig. 3, the subserver 30 is provided with a product information providing section 32 and a provision result sending section 35 comprising a CPU, a ROM, a RAM, a program storing section and the like; a product information storing section 36 and a provision result data storing section 37 comprising an auxiliary storing device such as a hard disk and the like; a communicating section 31 and the like, and is connected with the network 2 via the said communicating section 31. Also, the output device 38 is connected to the product information providing section 32.

The product information providing section 32 is a processing section to disclose detailed product information by means of web pages via the network 2 and enables, in response to a request from the user terminal unit 3, to browse the web pages concerning the detailed product information via the network 2.

This product information providing section 32 is provided with a catalogue information providing section 33 and an estimate information providing section 34 and it sends and provides, in response to a request from the user terminal unit 3, product information stored in the product information storing section 36 to the said user terminal unit 3.

In addition, catalogue data including product image data and basic estimate data such as a single product price, prices of option components, and multiplication rates which have been set according to users (distributing agents) are stored in the production information storing section 36 beforehand, and when the catalogue data is modified in accordance with a product design modification or when a new user (distributing agent) is registered, the data stored in the said product information storing section 36 is renewed by receiving new data from the main server 10 or uploading new data stored in a recording medium.

Also, the catalogue information providing section 33 sends and provides, in response to a request from the user terminal unit 3, the catalogue data stored in the production information storing section 36 to the said user terminal unit 3, and when a request for estimate is issued from the user terminal unit 3 along with input for specifying a product, options and the like, in response thereto, the estimate information providing section 34 makes an estimate of the specified specifications based on the basic estimate data stored in the product information storing section 36, sends and provides the calculated estimate data to the said user terminal unit 3. Furthermore, at a request from the user terminal unit 3, the catalogue information and estimate information can also be output from the output device 38 as a hard copy.

Also, if the product information providing section 32 provides the product information with the user terminal unit 3 in the above-described manner, provision result (an identification number of the user, a product number of the provided catalogue, product specifications provided for estimate and the like) are stored in the provision result data storing section 37.

The provision result sending section 35 performs processes to send data stored in the provision result data storing section 37 periodically or in response to a request from the main server 10. Furthermore, the said provision result sending section 35 may be constructed so as to directly receive, from the product information providing section 32, data equivalent to the data stored in the provision result data storing section 37 and send the received data to the main server 10. In this case, the provision result data storing section 37 is not always necessary.

According to the information system 1 of the present embodiment having the aforementioned construction, first, the information concerning the present system, the information concerning catalogue provisions and the like, and the information concerning user registration, etc., are disclosed by the main information disclosing section 12 of the main server 10 on the network 2 via web pages.

Then, when the user terminal unit 3 makes access to the main server 10 and a request to browse the detailed information is issued from the user terminal unit 3 along with input of the identification information and password, this is accepted by the address searching section 14, thereafter by the said address searching section 14, the data stored in the user information storing section 19 is searched and the identity is confirmed by collating the inputted identification information with the password. Then, the address data of the subserver 30 assigned to the said user is obtained, the obtained address data is sent to the address sending section 15, and from this address sending section 15, the address data is sent to the user terminal unit 3 which has issued the request.

Then, when the user terminal unit 3 which has received the address data makes access to the applicable subserver 30, by the product information providing section 32, the web pages concerning the detailed product information are sent to the said user terminal unit 3, a request for catalogue information and estimate information is accepted, and in response to the request, the catalogue information and estimate information are sent to the said user terminal unit 3 or output from the output device 38 as a hard copy. Herein, the printed matter output from the output device 38 is delivered to the applicable user, separately.

When the product information is provided as such, information concerning the provision result are then sent to the main server 10 and accumulated in the provision result data storing section 20.

Thus, in the information system 1 of the present invention, the catalogue information is stored in the product information storing section 36 as electronic data and provided to the user terminal unit 3 when necessary, therefore, even if a necessity to modify the contents of the product catalogue arises due to a design modification and the like, the catalogue data stored in the production information storing means 36 can be easily and quickly renewed with modified catalogue data, and in addition, there is no waste such that printed catalogues need disposing as those of the aforementioned prior-art.

In addition, since the catalogue information as electronic data is mostly image data, the volume thereof is extremely large. Accordingly, in a system where such data is provided only from the main server 10 to the user terminal unit 3, if the main server is simultaneously accessed by a large number of user terminal units 3 and simultaneously requests catalogue data, the sending speed becomes slow and there is a possibility that quick data provision becomes impossible. In the present embodiment, the subserver 30 is dispersedly arranged in each of the regions divided into a predetermined number, to a user who belongs to each region, the subserver 30 arranged in its own region is allocated, and the product information is provided from the allocated subserver 30 to the said user terminal unit 3, therefore, an excessive concentration of access from users can be prevented and quick and smooth provision of production information is possible.

In addition, since the user can obtain estimate information by accessing the subserver 30, compared to the aforementioned prior art, a desired estimate can be quickly obtained. Accordingly, occurrence of a problem such that negotiations are canceled because of a delay in submitting an estimate as in the prior art can be prevented.

In addition, as mentioned above, since the catalogue data is mostly image data, the volume is extremely large. Accordingly, if such catalogue data is sent via communications, the sending time becomes considerably long. In the present invention, since the requested catalogue information can be output from the output device 38 connected to the subserver 30 as a hard copy and provided for the user, the communications time with the user terminal unit 3 for providing the catalogue information can become an extremely short time.

Herein, if the product information is provided to the user from each subserver 30 as described above, information as to what production information has been provided to users, that is, information concerning user needs cannot be administered in a unified manner. However, in the present embodiment, the provision result data is taken into the main server 10 and administered in a unified manner, it is possible to analyze the information thereafter, grasp trends of user needs, and reflect those trends on product development and sales strategy.

In the foregoing, one detailed embodiment of the present invention has been described, however, in addition to the above, various kinds of information such as an event schedule and the like may be sent from the main server 10 or the subserver 30 to the user terminal unit 3, and moreover, a machining consultation may be performed through web pages. Furthermore, results of the machining consultations may be accumulated and disclosed as FAQ (Frequency Asked Questions).

## Claims

1. A product information system in which a main server (10) and a plurality of subservers (30), each of which is disposed in each set region, can be mutually connected via a network (2), wherein
the said main server (10) comprises:
a user information storing means (19) for mutually linking and storing identification information assigned to a user and an address of a subserver (30) which controls the said user;
a searching means (14) for receiving identification information from a user, searching through data stored in the said user information storing means (19), and obtaining an address of a subserver (30) which controls the said user; and
a sending means (15) for sending the address of the subserver (30) obtained by the said searching means (14) to a terminal unit (3) of the user,
and the said each subserver (30) comprises:
a product information storing means (36) in which product information is stored; and
a product information providing means (32) for providing product information stored in the said product information storing means (36) in response to a request from the said user terminal unit (3).

2. A product information system as set forth in Claim 1, wherein
an output device (38) for outputting, as a hard copy, product information, which is requested by the user, is connected to each of the said subservers (30).

3. A product information system as set forth in Claim 1 or 2, wherein
the said each subserver (30) further comprises a provision result sending means (35) for sending data concerning provided product information to the main server (10).
